(19) **Europäisches Patentamt European Patent Office Office européen des brevets**

(11) **EP 2 731 986 B1**

(12) **FASCICULE DE BREVET EUROPEEN**

(45) Date de publication et mention de la délivrance du brevet:
**12.02.2020 Bulletin 2020/07**

(21) Numéro de dépôt: **12744092.3**

(22) Date de dépôt: **12.07.2012**

(51) Int Cl.:
*C08J 9/00* (2006.01)      *C08J 9/30* (2006.01)
*C04B 26/06* (2006.01)      *C04B 28/24* (2006.01)
*C04B 38/00* (2006.01)      *F16L 59/00* (2006.01)
*C04B 14/06* (2006.01)      *C04B 111/28* (2006.01)

(86) Numéro de dépôt international:
**PCT/FR2012/051666**

(87) Numéro de publication internationale:
**WO 2013/007958 (17.01.2013 Gazette 2013/03)**

(54) **MATÉRIAUX D'ISOLATION THERMIQUE HAUTES PERFORMANCES**

LEISTUNGSSTARKE WÄRMEDÄMMSTOFFE

HIGH-PERFORMANCE THERMAL INSULATION MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2011 FR 1156429**

(43) Date de publication de la demande:
**21.05.2014 Bulletin 2014/21**

(73) Titulaire: **Saint-Gobain Isover**
**92400 Courbevoie (FR)**

(72) Inventeurs:
• **DEKONINCK, Alexandra**
**95600 Eaubonne (FR)**
• **DENKOV, Nikolai Denkov**
**1407 Sofia (BG)**

• **LESOV, Ivan Igorov**
**Sofia (BG)**
• **TCHOLAKOVA, Slavka Stoyanova**
**1407 Sofia (BG)**
• **GOLEMANOV, Konstantin Nikolaev**
**3031 RM Rotterdam (NL)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A2- 1 892 226        WO-A1-03/097227**
**WO-A1-2006/134080      WO-A1-2010/126792**
**WO-A1-2011/015751      WO-A1-2011/095745**

## Description

La présente invention concerne un matériau d'isolation thermique haute performance, son procédé de fabrication, ainsi que son utilisation dans le domaine de la construction pour isoler les parois (extérieures ou intérieures) de bâtiments ou combler des interstices dans des matériaux (murs creux ou "cavity walls", canalisations, etc.), ce matériau isolant pouvant se présenter sous forme de panneaux, ou éventuellement sous forme de granulés, blocs, couches, projetés, moulés, etc.

Qu'il s'agisse du marché du neuf ou de la rénovation, la demande de produits d'isolation, en particulier thermique, performants, est toujours aussi importante. Outre des propriétés d'isolation accrues et le respect du cahier des charges des ouvrages du bâtiment, la demande pour des produits offrant plus de confort d'utilisation, de pérennité, d'économie de matière première, etc. dans une optique notamment de développement durable, est également croissante. Il est particulièrement avantageux, dans cette recherche de matériaux offrant une meilleure isolation thermique que lesdits matériaux présentent également, voire améliorent, d'autres propriétés recherchées dans la construction de bâtiments, notamment en matière d'allégement de charge, de résistance mécanique, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses phénoliques ou de polyuréthane. Les performances thermiques des matériaux isolants essentiellement minéraux se traduisent par des valeurs de conductivité thermique À couramment supérieures à 35, en particulier de l'ordre de 40 mW/m.K, valeurs qui peuvent être plus basses dans le cas des isolants essentiellement organiques, par exemple dans le cas d'isolants cellulaires incorporant un gaz de plus faible conductivité thermique que l'air, pour améliorer les performances thermiques. Un inconvénient de ces matériaux toutefois est la difficulté de conserver le gaz au sein de la matrice au cours du temps, le matériau perdant en vieillissant une partie de ces performances thermiques. De surcroit, pour les isolants organiques, la réaction au feu est mauvaise du fait de leur nature.

On peut également avoir recours à des matériaux dans lesquels un vide a été effectué de façon à former par exemple des panneaux sous vide. Ces isolants sont difficiles à utiliser car ils ne peuvent être ni découpés, ni percés, et ils peuvent subir une perte progressive du vide sur des longues durées.

On peut également citer comme isolants les aérogels, généralement sous forme de granules translucides ou de poudre présentant des tailles de grains ou granules classiquement de l'ordre du mm, aérogels particulièrement performants en termes d'isolation thermique, mais dont les faibles propriétés mécaniques imposent de les utiliser avec des protections ou un agent de renforcement, ou les aérogels au sein de mats (ou nappes) formés de fibres enchevêtrées (mécaniquement résistantes) pour lesquels il peut être difficile de donner une forme déterminée. Ces aérogels (en particulier de silice) sont difficiles et coûteux à obtenir à l'échelle industrielle, ils nécessitent des conditions de séchages délicates et leur combinaison avec d'autres isolants pour obtenir une tenue mécanique ou une forme adéquate peut être complexe. Leur utilisation reste donc limitée. Le document WO2010/126792 par exemple décrit des compositions incluant des aérogels.

Il existe par conséquent une forte demande pour développer des matériaux performants en termes d'isolation thermique, mais plus faciles et moins coûteux à fabriquer industriellement que les aérogels notamment. Outre ses bonnes performances thermiques (améliorées par rapport aux produits minéraux courants), il est souhaitable que le produit présente une bonne tenue (notamment au vieillissement, ou en terme de résistance mécanique ou autre : chimique, feu, etc.) sans alourdir sa charge. Il est également souhaitable qu'il reste facile à étaler lors de son durcissement et permette la réalisation de toutes les formes souhaitables, notamment par moulage (ou éventuellement par étalement ou projection d'une couche).

La présente invention a ainsi mis au point de nouveaux matériaux isolants permettant d'atteindre ce but et de pallier aux inconvénients cités précédemment, ces nouveaux matériaux étant essentiellement minéraux, étant obtenus directement (sans devoir recourir à une réaction chimique modifiant leur composition chimique) à partir de particules minérales de (ou possédant une) porosité sub- (ou sous-) micronique (c'est-à-dire comprenant des pores de diamètres inférieurs à 1 μm), et présentant deux gammes de porosités différentes. Parmi ces matériaux, la présente invention s'est en particulier intéressée à ceux obtenus à partir de particules de silice, présentant l'avantage d'une porosité importante (supérieure à celles par exemple d'autres particules minérales telles que les particules de carbonates ou de silicates), ces matériaux étant cependant d'obtention plus délicate (que lorsque l'on utilise par exemple les particules de carbonates ou de silicates précédemment évoquées) du fait notamment de la faible taille de la silice (généralement inférieure à quelques centaines de nanomètres), de leur nature généralement plus hydrophile, et de la difficulté de stabiliser les particules de silice et le matériau poreux (mousse) obtenu. La présente invention a en particulier cherché un procédé d'obtention plus spécifiquement adapté au cas desdits matériaux à base de particules de silice pour permettre l'obtention de propriétés thermiques encore améliorées, et permettant en outre une meilleure stabilité des matériaux obtenus.

La présente invention répond aux précédents objectifs et proposant un nouveau matériau isolant thermique, en particulier (au moins) sous forme d'une mousse solide, ce matériau étant formé à partir de (ou fait à partir de, ou à base de, ou formé de) particules de silice, autres que des aérogels, de porosité sub- (ou sous-) micronique, ce matériau intégrant (ou comprenant ou combinant) deux gammes de porosités différentes (ou distinctes ou disjointes), dont une première gamme (dite de macroporosité dans la présente invention), constituée de pores (dits macropores) de diamètres (c'est-à-dire présentant une distribution de diamètres) compris entre 10 microns et 3 millimètres, en particulier compris entre quelques dizaines et quelques centaines de microns (et notamment entre 10 et 500 $\mu$m), et une seconde gamme (dite de porosité submicronique dans la présente invention) constituée de pores (dits submicroniques) de diamètres (c'est-à-dire présentant une distribution de diamètres) supérieurs à 4 nm, de préférence supérieurs à 5 nm, et inférieurs à 300 nm, en particulier inférieurs à 200 nm (voire inférieurs à 100 nm) le volume poreux desdits pores submicroniques étant d'au moins 1 cm$^3$/g (c'est-à-dire 1 cm$^3$ par gramme de matériau) et la masse volumique (apparente ou globale, c'est-à-dire mesurée sur l'ensemble du produit) du matériau isolant étant inférieure à 300 kg/m$^3$.

Ce matériau peut être obtenu à partir du procédé comprenant les étapes suivantes :

- au moins une étape de préparation d'un mélange (ou ensemble), généralement aqueux (dispersion, en particulier suspension dans l'eau), de particules de silice de surface spécifique S supérieure à 5 m$^2$/g, en particulier supérieure à 50 m$^2$/g, et possédant un volume poreux d'au moins 1 cm$^3$/g dans la gamme de porosité comprise entre 4 nm et 300 nm ;
- au moins une étape de réalisation d'une mousse (aqueuse (ou humide)) incluant lesdites particules (à partir du mélange de particules précité et/ou par incorporation dudit mélange de particules dans une mousse aqueuse formée séparément);
- au moins une étape de mise en forme (généralement pour former un monolithe et/ou une couche), notamment par moulage ou coulage ou projection (sur une surface ou paroi) de cette moussei ;
- au moins une étape de séchage (en laissant sécher ou en séchant) au moins partiel de la mousse ou du matériau ainsi obtenu.

La réalisation de la mousse comprenant les particules/le mélange de particules peut se faire:

- par moussage direct : c'est-à-dire par l'introduction d'un gaz dans le mélange de particules par diverses méthodes telles que : l'agitation mécanique, le bullage d'un gaz, par exemple à travers un fritté (plaque poreuse à travers laquelle on fait passer le gaz pour générer la mousse), le bullage in-situ d'un gaz dissous (par exemple du pentane) ou d'un gaz par réaction chimique, notamment par décomposition (par exemple du peroxyde d'hydrogène en eau et dioxygène), etc, et/ou
- par incorporation : c'est à dire l'incorporation du mélange de particules dans une mousse aqueuse déjà préformée (ou inversement l'incorporation de la mousse préformée au mélange de particules), ladite mousse étant par exemple préparée par moussage à l'aide d'une dispersion (généralement aqueuse) dans laquelle on introduit un gaz par l'une des méthodes ci-dessus,

le moussage même se faisant généralement en présence d'au moins un tensioactif (ajouté dans le mélange de particules dans le cas du moussage direct, ou le tensioactif étant présent dans la dispersion que l'on fait mousser pour former la mousse aqueuse dans le cas de l'incorporation).

Même si l'utilisation d'un tensioactif (ou agent de surface) de type anionique (ou sel de tensioactif anionique) est possible, la présente invention a mis en évidence, pour obtenir les matériaux selon l'invention, l'intérêt de l'utilisation comme tensioactif(s) d'un ou plusieurs zwittérions de type bétaïne, et avantageusement du cocamidopropyl betaïne (ou CAPB, à base de lauramidopropyl betaine ou {[3-(dodecanoylamino)propyl](dimethyl)ammonio} acetate), et a parallèlement mis au point un procédé spécifique avantageux et particulièrement performant pour obtenir des matériaux isolants encore améliorés à partir (des particules) de silice, ce procédé comprenant les étapes suivantes :

- au moins une étape de préparation d'un mélange (ou ensemble), généralement aqueux (dispersion, en particulier suspension dans l'eau), de particules de silice de surface spécifique S supérieure à 5 m$^2$/g, en particulier supérieure à 50 m$^2$/g, et possédant un volume poreux d'au moins 1 cm$^3$/g, dans la gamme de porosité comprise entre 4 nm et 300 nm,
- au moins une étape de réalisation d'une mousse à partir dudit mélange de particules en incorporant (comme tensioactif(s)) au moins un zwittérion choisi parmi les bétaïnes, en particulier les bétaïnes d'ammonium, et de façon particulièrement préférée, le cocamidopropyl bétaïne,
- au moins une étape de mise en forme (généralement pour former un monolithe et/ou une couche), notamment par moulage ou coulage ou projection (sur une surface ou paroi) de cette mousse,
- au moins une étape de séchage (en laissant sécher ou en séchant) au moins partiel de la mousse ou du matériau ainsi obtenu,
- le cas échéant (et de façon préférée dans ledit procédé) au moins une étape d'hydrophobation (généralement hydrophobation du matériau obtenu mais l'hydrophobation peut également/alternativement être faite à un autre moment, par exemple en même temps que le moussage).

Ce procédé permet d'obtenir des matériaux (mousses de silice) stables, présentant une bonne tenue et de bonnes propriétés d'isolation thermique, comme explicité et illustré ultérieurement. On observe notamment une interaction ionique entre le tensioactif zwitterionique précité et la silice (et une stabilisation des particules et des interfaces de la mousse par ledit tensioactif) permettant une bonne mise en forme de la mousse et une bonne stabilité des particules et de la mousse humide (vis-à-vis notamment du drainage, du mûrissement d'Ostwald, de la coalescence, etc.), la stabilité de cette mousse humide étant importante car permettant de conserver la structure poreuse lors de son séchage et donc d'obtenir une mousse de silice cohésive/solide. Ce procédé préféré permet en outre de contrôler la taille des bulles de la mousse et la fraction d'air incorporée, autorisant également l'obtention de mousses de silice allégées/de densité contrôlée.

Comme défini selon l'invention, le produit mis au point comprend deux porosités/deux types de pores (se différentiant significativement par leur taille (on observe en l'occurrence deux distributions de tailles de pores distinctes autour de deux pics distincts), qualifiée en l'occurrence par leur diamètre), les pores d'une catégorie (tels que les pores submicroniques) étant présents entre les pores d'une autre catégorie (tels que les macropores). De façon générale et avantageuse, seulement deux porosités/types de pores sont présents dans le produit, cependant il n'est pas exclu que le produit puisse comprendre plus de deux porosités/types de pores (notamment autour de pics de distribution distincts). Le diamètre permettant de qualifier les pores submicroniques est calculé, comme explicité par la suite, à partir des mesures de volumes poreux par porosimétrie à intrusion de mercure, à l'aide de l'équation de Washburn, le diamètre des macropores étant mesuré par microscope électronique à balayage (MEB) ou par tomographie X.

Le produit présente des pores (et est formé de particules présentant des pores) submicroniques de diamètres supérieurs à 4 nm, notamment supérieurs à 5 nm, généralement supérieurs à 7 nm et en particulier supérieurs à 10 nm, et en outre inférieurs à 300 nm, en particulier généralement inférieurs à 200 nm, voire à 100 nm (les diamètres variant dans ces limites selon les particules initiales utilisées, par exemple selon leur surface spécifique, la distribution de diamètres pouvant en outre être plus ou moins étroite ou resserrée autour d'un pic). Comme indiqué précédemment, les macropores sont de diamètres (c'est-à-dire présentent une distribution de diamètres) entre 10 microns et 3 mm, avantageusement supérieurs à 50 $\mu$m voire supérieurs à 100 $\mu$m, et avantageusement inférieurs à 500 $\mu$m, voire inférieurs à 300 $\mu$m.

De préférence, le volume poreux pour les pores submicroniques varie de 1 à 3 cm$^3$/g, et en particulier de 1 à 1,5 cm$^3$/g, et le volume poreux pour les macropores est supérieur à 1 cm$^3$/g (c'est-à-dire 1 cm$^3$ par gramme de matériau), de préférence supérieur à 3 cm$^3$/g, et en particulier varie de 5 à 15 cm$^3$/g. Le volume poreux pour les pores submicroniques ($V_{sm}$) est déterminé par porosimétrie à mercure réalisée sur des appareils de référence Pascal 140 et Pascal 440 commercialisés par la société Thermo Scientific, et est considéré comme étant égal au volume cumulé de mercure introduit dans les pores pour des pressions de mercure supérieures à 1.47 MPa (pression calculée par l'équation de Washburn -Washburn, 1921- pour un diamètre de pore de 1 micron) et allant notamment jusqu'à 400 MPa avec les appareils précités, les pores étant supposés cylindriques, en supposant la tension de surface du mercure égale à 480 dynes/cm et l'angle de contact particules minérales/mercure égal à 140°, le volume poreux étant donné en cm$^3$ par gramme de matériau. Le volume poreux des macropores ($V_m$) est déterminé par la formule :

$$V_m = 1/\rho_a - 1/\rho_s - V_{sm}$$

$\rho_a$ étant la masse volumique apparente du produit (correspondant au rapport de sa masse sur son volume), $1/\rho_a$ étant le volume spécifique du matériau, $\rho_s$ étant la masse volumique du squelette (partie du produit occupée par de la matière dense/sans pores), (majoritairement) minéral, mesurée par pycnométre à hélium (norme ASTM C604- "standard test method for true specific gravity of refractory materials by gas-comparison pycnometer", $\rho_s$ étant de l'ordre de 2000 kg/m$^3$ pour la silice, la masse volumique pouvant donc être divisée par un facteur de l'ordre de 10 entre la masse volumique initiale des particules et celle du matériau final, cet allégement résultant notamment du moussage et de l'air introduit à cet effet à un taux d'au moins 65% en volume pour obtenir le produit selon l'invention), et $1/\rho_s$ étant le volume spécifique du squelette.

Le volume poreux total ($V_p = V_m + V_{sm}$) du matériau isolant thermique selon l'invention est avantageusement supérieur à 1.5 cm$^3$/g, et préférentiellement compris entre 5.5 et 18 cm$^3$/g.

Le matériau isolant thermique selon l'invention se présente sous forme d'une mousse solide (généralement rigide) de (ou à base de) particules de silice poreuses et est, comme déjà évoqué, obtenu en particulier à partir du mélange d'au moins les éléments suivants : de l'eau (ou éventuellement une mousse aqueuse), des particules (précitées) de silice de porosité submicronique (généralement en dispersion/suspension (dans (de) l'eau)), lesdites particules présentant (initialement, telles qu'introduites dans le mélange) une surface spécifique S d'au moins 5 m$^2$/g (la surface spécifique étant donnée en m$^2$ par gramme de particule(s)), en particulier supérieure à 50 m$^2$/g, et le cas échéant (au moins) un tensioactif et/ou éventuellement un liant organique et/ou un liant minéral et/ou un agent porogène, et/ou des fibres (ou renforts), etc, comme explicité ultérieurement.

Ainsi, de façon plus générale, l'invention concerne une mousse (solide), inorganique (majoritairement, comme indiqué ultérieurement), destinée à l'isolation thermique, cette mousse (formant le produit précité selon l'invention) étant formée de particules de silice poreuses (cette mousse étant qualifiée de 'mousse de silice'), et intégrant deux gammes de porosités différentes, une première gamme de (macro)pores de diamètres compris entre 10 microns et 3 millimètres, et une seconde gamme de pores submicroniques de diamètres supérieurs à 4 nm et inférieurs à 300 nm et dont le volume poreux est d'au moins 1 cm$^3$/g, la masse volumique de la mousse étant inférieure à 300 kg/m$^3$.

La création de cette porosité submicronique (ou volume poreux à l'échelle sub-micronique) emprisonnant de l'air dans une structure (une mousse) présentant déjà des (macro)pores (cette macroporosité provenant du moussage et correspondant aux bulles d'air introduites, la taille des bulles et macropores sensiblement sphériques résultants étant relativement régulière, avec une distribution de diamètres plus ou moins étroite ou resserrée en particulier entre 50 $\mu$m et 500 $\mu$m, comme déjà évoqué), et dans les zones (ou "murs") entre lesdits (macro)pores, améliore les performances thermiques du produit, tout en donnant un produit comparativement plus léger du fait de la présence de ces pores supplémentaires, cette porosité supplémentaire dans les murs de la mousse étant apportée notamment par la porosité intra particulaire (initialement présente dans les particules utilisées et résultant généralement de leur synthèse), et résultant également de l'empilement de ces particules poreuses pour constituer les murs de la mousse. Les mousses ainsi obtenues selon l'invention présentent des propriétés d'isolation thermique améliorées par rapport à des mousses inorganiques plus classiques de même densité, ou par rapport à des isolants cellulaires organiques courants de type polystyrène, tout en étant (plus) économiques et restant légères, et tout en présentant une meilleure résistance au vieillissement et au feu que des produits organiques aux performances d'isolation thermiques équivalentes. Lesdits matériaux/mousses sont compatibles aussi bien pour une utilisation comme matériau de comblement, que pour une utilisation en surface, notamment en façade.

Les performances thermiques de l'isolant selon l'invention se traduisent par des valeurs de conductivité thermique À (globale) inférieures à 40 mW/m.K, notamment comprises entre 20 et 40 mW/m.K (environ), en particulier inférieures à 35 mW/m.K (environ), et de préférence inférieures à 30 mW/m.K environ (en particulier pour l'isolant obtenu par le procédé préféré selon l'invention), descendant notamment jusqu'à 25 mW/m.K, voire encore moins (les performances thermiques étant d'autant meilleures que la conductivité thermique est basse). La conductivité thermique À (en W/m.K) représente la quantité de chaleur passant au travers de l'isolant (d'un mètre d'épaisseur, par m$^2$ et lorsque la différence de température entre les deux faces est de 1°K). Les valeurs de conductivité thermique À (comparées à pression et température identiques, en particulier à pression atmosphérique (1 bar) et température ambiante, sont mesurées dans le cadre de l'invention avec un fluxmètre de la série HFM 436 de la société NETZSCH™ en suivant les protocoles établis par les normes ASTM C518 et ISO 8301. La température de caractérisation est de l'ordre de 25 °C, et les mesures sont effectuées à pression atmosphérique, la précision des mesures étant estimée à 5%.

A titre comparatif, le gain de performance en matière de conductivité thermique peut être d'au moins 20 ou 25%, voire (avec le procédé selon l'invention) d'au moins 30% (de moins en conductivité thermique) par rapport à une mousse solide similaire (minérale et de même densité) mais obtenue sans les particules poreuses et ne présentant pas la double porosité (mais uniquement les macropores), par exemple par rapport à une mousse de verre obtenue (notamment) à partir de verre que l'on fait fondre puis que l'on introduit dans un four de moussage, comme illustré ultérieurement dans les exemples comparatifs.

Le produit selon l'invention est également beaucoup plus facile d'obtention que les aérogels (lesquels de par leur caractère hydrophobe ne permettent pas notamment d'obtenir véritablement de mousse et n'engendrent pas de double porosité telle que définie selon l'invention), obtenus en partant de précurseurs/matières premières et en opérant une réaction chimique pour former la substance minérale les formant (tandis que, dans le cas du produit selon l'invention, la substance minérale employée - les particules minérales (autres que des aérogels donc)- est déjà formée et simplement mise en forme sans recourir à des traitements visant à les dégrader (broyage, etc) ou à modifier leur composition chimique, comme il apparaît dans le procédé selon l'invention). La structure poreuse du produit selon l'invention et/ou ledit produit est ainsi avantageusement formée sans réaction chimique ni altération comme précitées. La même observation peut être faite en comparaison de structures ou mousses méso- ou nanoporeuses existants dans d'autres domaines ou applications (par exemple utilisées pour des tamis moléculaires et obtenues par exemple par voie sol-gel à partir de précurseurs), qui, de spécificités et de contraintes différentes, résultent usuellement de réactions chimiques ou d'opérations mécaniques de dégradation. Le produit selon l'invention est obtenu par un procédé plus simple et économique de mise en oeuvre.

La masse volumique apparente du matériau (ou produit ou mousse) selon l'invention est inférieure à 300 kg/m$^3$, cette masse volumique pouvant varier selon la formulation (additifs, pH...) et les conditions de moussage (temps de moussage, vitesse d'agitation, géométrie de cuve et pale, etc.). La masse volumique est déterminée en faisant le rapport de la masse d'un volume donné du matériau, sur ledit volume. Généralement, la masse volumique du matériau isolant selon l'invention est inférieure ou égale à 200 kg/m$^3$, en particulier inférieure à 130 kg/m$^3$, avantageusement inférieure à 120 kg/m$^3$, voire inférieure à 100 kg/m$^3$, notamment inférieure à 80

kg/m$^3$.

Le matériau selon l'invention est majoritairement (à au moins 80% en poids, voire 90%), voire uniquement, minéral/inorganique (les matières organiques éventuellement présentes pouvant être le cas échéant un liant organique, un greffage organique, etc.) ce qui permet d'assurer notamment une bonne tenue au feu. Le matériau est en outre essentiellement (à au moins 80% en poids, voire 90%), formé des particules de silice précitées dans une structure de mousse. Ces particules de silice sont solides et poreuses, et sont utilisées directement pour former le produit sans modification de leur formule.

Les particules de silice sont généralement (initialement) sous forme d'une poudre, dont la granulométrie varie avantageusement de 1 μm à 500 μm (notamment entre 3 et 300 μm) de diamètre médian D50, ce diamètre étant mesuré par analyse granulométrique par diffraction laser selon la norme ISO 13320-1 : 2000 notamment, la poudre étant le cas échéant mise en dispersion, en particulier dans l'eau (de l'huile notamment pouvant également être ajoutée, par exemple pour un effet tensioactif et de consolidation, et/ou un liant notamment), et utilisée (ou incorporée) sous forme de ladite dispersion pour former le produit selon l'invention. De préférence la taille des particules (D50) est inférieure à 100 μm, en particulier inférieure à 10 μm.

La surface spécifique initiale S de ces particules de silice est avantageusement supérieure à 30 m$^2$/g, généralement supérieure à 50 m$^2$/g, notamment supérieure à 100 m$^2$/g, cette surface spécifique allant en particulier jusqu'à 500 m$^2$/g, et étant notamment avantageusement comprise entre 100 et 500 m$^2$/g, voire le cas échéant entre 100 et 300 m$^2$/g (ces particules étant généralement et avantageusement hydrophiles pour pouvoir être dispersées dans l'eau sans ajout de composant ou tensioactif à cet effet, la surface spécifique n'excède pas en effet avantageusement les valeurs maximales précitées pour éviter une dégradation des performances thermiques du fait dudit caractère hydrophile).

Les surfaces spécifiques, exprimées en m$^2$/g, sont mesurées par adsorption d'azote (théorie de l'adsorption multiple des gaz à l'aide de déterminations de Brunauer, Emmett et Teller- méthode BET) conformément à la norme ISO 9277 : 2010.

De préférence, la substance minérale formant les particules de silice est une silice amorphe, telle qu'une silice précipitée, une silice pyrogénée, une fumée de silice, ou un gel de silice. On préfère en particulier la silice précipitée et/ou la silice pyrogénée (telle que la silice pyrogénée commercialisée par la société Wacker™ sous la référence HDK®T30). De façon particulièrement préférée, il s'agit d'une silice précipitée, par exemple la silice précipitée commercialisée sous la référence Tixosil®365 par la société Rhodia™ de 160 m$^2$/g de surface spécifique (mesurée par BET conformément à la norme ISO 9277 : 2010). Les pores submicroniques dans le produit selon l'invention formé à partir de ces particules présentent en particulier un diamètre compris entre 4 nm et 200 nm (c'est-à-dire que chaque pore de cette catégorie présente un diamètre compris dans cette gamme, la distribution de l'ensemble des diamètres de ces pores étant plus ou moins étroite ou resserrée), en particulier inférieur à 100 nm.

Il est également possible le cas échéant de combiner plusieurs types de silices (par exemple d'utiliser conjointement des particules de silice pyrogénée et des particules de silice précipitée pour former le produit selon l'invention).

Outre les particules minérales, le matériau selon l'invention est formé à partir d'eau ou phase aqueuse (la présence d'un autre médium également, par exemple de l'huile et/ou un alcool, notamment du glycérol, n'étant pas exclue), médium(s) dans le(s)quel(s) se trouvent ou sont incorporées les particules minérales, et que l'on fait mousser (méthode dite de 'moussage direct' selon l'invention). Une autre méthode consisterait à utiliser une mousse aqueuse (ou liquide d'aspect savonneux, obtenu par un empilement désordonné de bulles de gaz dans une phase aqueuse) déjà formée, dans laquelle on rajoute les particules (notamment sous forme de dispersion, généralement aqueuse) (méthode dite 'd'incorporation'), mais le moussage direct est préféré pour la fabrication des mousses de silice selon l'invention. La phase aqueuse de départ non encore moussée dans laquelle se trouvent les particules avant moussage comprend en outre avantageusement au moins un composé tensioactif comme indiqué précédemment.

Des tensioactifs permettant un bon moussage sont notamment les (sels de) tensioactifs anioniques (les agents cationiques ou non ioniques posant pour leur part des problèmes pour le moussage), en particulier sélectionnés parmi les composés de formule générale : R-X$^-$, Y$^+$, pour lequel R est une chaîne aliphatique de 10 à 24 atomes de carbones, X$^-$ est un groupement portant une charge négative (groupement carboxylate, sulfate, sulfonate, etc.), et Y$^+$ est un contre cation sélectionné parmi les groupements ammonium, sodium et potassium, par exemple des sels de carboxylates comportant 12 à 24 atomes de carbone, sélectionnés notamment parmi les sels de myristate, de palmitate, de stéarate, d'oléate, ou de la base conjuguée de l'acide béhénique, ou des carboxylates issus du traitement des acides gras du suif, ou encore d'autres bases conjuguées d'acides gras comme par exemple les savons/gels douche comprenant des acides gras issus de sources naturelles telles que le suif, l'huile de coco, etc, par exemple des tensioactifs tels que le stéarate d'ammonium, etc.

Cependant, les tensioactifs anioniques ne s'adsorbant pas à la surface de la silice pour contribuer à la stabilisation de la mousse, on utilise de préférence au moins un zwittérion comme déjà mentionné comme tensioactif. Parmi les zwittérions, on peut notamment citer des acides aminés ou dérivés, etc. Selon l'invention, il s'agit de préférence te avantageusement de bétaïnes telles que les bétaïnes de phosphore et/ou les bétaïnes d'ammonium, et de façon particulièrement préférée il s'agit du cocamidopropyl betaïne (ou CAPB). Il semble que le CAPB s'adsorbe notamment à la surface de la silice tout en assurant une certaine répulsion électrostatique entre les particules, évitant ainsi leur agglomération, cette interaction conférant aux particules de très bonnes propriétés moussantes et permettant d'obtenir de faibles densités avec des tailles de bulles relativement fines, la mousse de silice obtenue étant alors suffisamment stable (du point de vue du drainage et de la coalescence) en particulier jusqu'à et pendant son séchage.

Le cas échéant, on peut utiliser, outre au moins un zwittérion, au moins un deuxième tensioactif (introduit également dans le mélange) ou co-tensioactif, le zwittérion agissant alors principalement sur la stabilité des bulles (le temps que le produit sèche), et le co-tensioactif pouvant intervenir par exemple sur un autre aspect tel que la prévention du mûrissement d'Ostwald.

Généralement, le mélange (pour l'obtention du matériau isolant, ou le mélange de particules) comprend moins de 5%, avantageusement moins de 2%, de tensioactif(s), dont au moins un zwittérion choisi parmi les bétaïnes (en particulier d'ammonium, et préférentiellement le CAPB). En particulier, le mélange comprend au moins un zwittérion à un taux inférieur à 2%, en particulier de l'ordre de 1%, et moins de 1% d'éventuel(s) autre(s) co-tensioactif(s).

On peut également, conjointement notamment à l'utilisation d'un agent tensioactif, utiliser au moins un agent porogène dans le mélange. Le terme « porogène » dans la présente invention désigne toute substance apte à générer de la porosité au sein d'un matériau à l'aide d'un traitement ultérieur à l'insertion de cet agent dans le matériau pour éliminer ledit agent au moins partiellement. L'ajout d'agents porogènes permet le cas échéant une augmentation supplémentaire du volume poreux. Les agrégats de substance minérale viennent se structurer autour des agents porogènes, la suppression desdits agents entraînant la formation de la porosité de manière contrôlée.

Le ratio pondéral de la substance minérale par rapport à l'agent porogène est par exemple de 0.2 à 3, notamment de 0.7 à 2.5. Au moins 10% (en poids), notamment au moins 30%, en particulier au moins 50%, et de préférence au moins 90%, de l'agent porogène est supprimé, par exemple par calcination ou lavage, lors de la fabrication du produit isolant (en particulier après formation de la mousse rigide).

Avantageusement, l'agent porogène est formé d'un matériau dont la température de calcination est inférieure à la température de fusion et/ou de frittage de la silice dans laquelle il est enfermé. Dans le cas des silices précipitées la température de calcination du porogène doit par exemple être inférieure à 700°C.

L'agent porogène est par exemple à base/sous forme de particules, généralement sphériques, d'au moins un matériau organique, par exemple un polymère, notamment sous forme colloïdale. Il peut être par exemple au moins une particule organique, constituée de (co)polymères à blocs amphiphiles ou stéréoréguliers comprenant des blocs AB ou ABA (A représentant un bloc hydrophile comme l'oxyde de polyéthylène ou l'acide polyacrylique et B un bloc hydrophobe tel que le polystyrène, l'oxyde de polypropylène, le polyisoprène, ou la polyvinylpyridine). Il peut s'agir aussi de particules d'amidon et/ou de sels inorganiques, du type NaCl (incorporés dans le mélange aqueux contenant le cas échéant un co-solvant tel que l'éthanol, les sels inorganiques étant éliminés par la suite par lavage). De préférence, il s'agit de particule(s) de latex et/ou de dispersion colloïdale de polymère(s) et/ou de particule(s) constituée(s) de macromolécule(s), choisie(s) parmi celle(s) donnant plutôt des sphères. Le latex peut comprendre notamment: un (co)polymère de type vinylique, avantageusement de type acrylique et/ou dérivé d'acide carboxylique, un copolymère de chlorure de vinyle et d'oléfine, silanisé ou non, etc. Il peut s'agir d'un latex commercial tel que le polyuréthane Baybond XP 2602 commercialisé par la Société Bayer, d'un latex sous forme de cire de polyéthylène oxydée ou non, éventuellement avec un copolymère acrylique (tels ceux commercialisés par Rohm and Haas et de la société Dow Chemical), d'un copolymère styrène-acrylique ou tout acrylique obtenu par polymérisation radicalaire en émulsion ou dispersion (ceux commercialisés par la société BASF dans la gamme Acronal®), etc. De préférence, il s'agit d'au moins un copolymère acrylique hydrodispersible (tel ceux commercialisés sous la référence Neocryl® par la société DSM, tel que le Neocryl® XK-52, le Neocryl® BT 21 ou le Neocryl® BT 100). Le(s) latex utilisé(s) comme porogène(s) ont avantageusement une température de transition vitreuse Tg supérieure à 50°C, notamment entre 50 et 200°C, en particulier entre 70 et 170°C.

Les porogènes peuvent être utilisés en émulsion ou dispersion, leur taux massique étant par exemple compris entre 5 et 75%, notamment entre 20 et 60%, voire entre 30 et 50% en poids total de l'émulsion ou de la dispersion.

Le mélange (pour l'obtention du matériau isolant ou le mélange de particules) peut également comprendre au moins un liant, organique et/ou minéral, utilisé, par exemple, pour permettre la liaison des particules entre elles et/ou la liaison des particules au reste de la structure du matériau.

Le liant peut être avantageusement un latex (notamment choisi cette fois parmi ceux ayant tendance à former des films, ce liant permettant notamment de renforcer la mousse), en particulier une émulsion ou dispersion aqueuse d'une ou plusieurs substances polymères naturelles ou synthétiques, généralement thermoplastiques. Ce liant latex a préférentiellement une température de transition vitreuse Tg inférieure à 50°C, en particulier entre - 50°C et 25°C, de préférence entre - 20°C et 10°C, avantageusement entre - 10°C et 0°C, et a préférentiellement une température de filmification inférieure à la température ambiante, en vue d'obtenir la tenue recherchée pour les matériaux isolants à appliquer sur un support dans le domaine de la construction de bâtiments notamment. Le latex peut renfermer un (co)polymère de type vinylique (par exemple à base d'acétate de vinyle, en particulier d'homopolymère de polyacétate de vinyle, ou de copolymère d'acétate de vinyle et d'acide et/ou ester (méth)acrylique, maléïque, d'oléfine et/ou de chlorure de vinyle, ou à base de copolymère chlorure de vinyle/éthylène), ou de type acrylique (notamment un copolymère acrylonitrile/ester acrylique, ou styrène/acide ou ester acrylique silanisé et/ou dérivé d'acide carboxylique). Le latex peut notamment être un copolymère styrène-acrylique ou tout acrylique. Ces latex sont par exemple ceux commercialisés par la société BASF dans la gamme référencée par la dénomination Acronal®, en particulier l'Acronal® S 400.

On peut également ajouter d'autres additifs (généralement dans le mélange de particules ou le mélange utilisé pour obtenir la mousse/le produit selon l'invention ou dans la mousse), comme des agents rhéologiques (plastifiant, tel que la glycérine, etc.), des agents de surface, des agents rétenteurs d'eau (tels que la gélatine ou la glycérine, etc.), des opacifiants (par exemple de l'aluminium ou du graphite comme opacifiant infra rouge), des charges minérales, ou d'autres matériaux renforçant la tenue mécanique (fibres de verre ou organique, silicate, gypse, ciment, liants organiques de type latex comme explicité précédemment...), ou limitant la contraction de la mousse (microsphère de verre...) ou la disproportion des bulles et réduisant leur taille(le moussage étant par exemple opéré sous atmosphère de perfluorohexane), etc.

Notamment, pour prévenir le mûrissement, on peut avantageusement ajouter des co-tensioactifs de type tensioactifs cationiques ou polymères cationiques, ou saponines, ou des polymères non ioniques de type éther de cellulose (tel que l'hydroxypropyl methylcellulose), ces différents agents pouvant également avoir un rôle important lors du séchage des mousses tel que la réduction de la contraction et/ou de la fracturation (les éthers de cellulose, tels que l'hydroxypropyl methylcellulose, réduisant en particulier significativement la fracturation).

Notamment, le matériau isolant thermique selon l'invention peut être préparé à partir d'au moins les éléments suivants, dans les quantités exprimées en pourcentage pondéral par rapport à la masse totale du mélange : de 40 à 95 % d'eau, de 5 à 60 % de particules de silice et de 0 à 15 % d'additif(s) (liant, opacifiant, agent hydrophobant, tensioactif, porogène, etc.)

La présente invention rend ainsi possible la fabrication d'une grande variété de matériaux hautement isolants à base de silices et le cas échéant de différents additifs, pour couvrir un large éventail des applications isolation notamment dans le domaine du bâtiment.

Les additifs (en particulier le(s) tensioactif(s)) sont généralement introduits dans le mélange de particules avant l'introduction du gaz permettant le moussage (dans le second cas de l'incorporation des particules dans une mousse aqueuse déjà formée, celle-ci pourrait aussi être préparée à l'aide d'une solution ou dispersion comprenant lesdits additifs (dont le(s) tensioactif(s)) avant l'introduction du gaz permettant le moussage).

Dans le procédé selon l'invention, le pH du mélange peut par ailleurs être ajusté (ajusté aux environs de 8.5 dans le cas du CAPB, le CAPB à pH trop acide perdant une de ses charges) avantageusement, en particulier avant moussage.

L'étape de mise en forme comprend généralement des opérations de coulée ou moulage de la mousse comprenant les particules dans des cavités de forme ou section appropriée(s), ou de projection de la mousse sur une surface ou paroi. Le terme moulage est à prendre au sens large et recouvre toute forme de conformation, telles que la coulée en moule ouvert, l'extrusion à travers une filière et découpe de l'extrudât, etc, le séchage étant généralement consécutif à la mise en forme.

Le procédé selon l'invention peut également inclure le cas échéant, après le séchage, au moins une étape de traitement thermique permettant la consolidation du matériau et /ou l'élimination le cas échéant de l'agent porogène.

Le procédé comprend avantageusement une étape d'hydrophobation du matériau obtenu (c'est-à-dire que le matériau est rendu hydrophobe), cette hydrophobation, dans le présent cas, contribuant à la diminution de la conductivité thermique de la mousse (par exemple jusqu'à environ 25% par rapport au produit n'ayant pas subi cette étape).

Le matériau isolant thermique obtenu est solide (et généralement rigide) et multi- (en particulier bi-) poreux. Il est généralement (conçu) sous forme d'un panneau dont l'épaisseur est au moins égale à 5 mm. Il peut aussi être obtenu sous forme d'au moins une couche (appliquée par exemple sur une plaque de plâtre), ou le matériau à l'état encore humide peut être imprégné ou étalé sur un voile (par exemple non tissé...), ou le matériau peut être associé à une matrice de fibres ou autre couche, etc.

La présente invention concerne également l'utilisation du matériau isolant/de la mousse selon l'invention dans le domaine de la construction, pour isoler notamment des parois de bâtiments.

La présente invention et ses avantages seront mieux compris à la lecture des exemples décrits ci-après, à titre illustratif et non limitatif:

Exemple 1 :

Dans cet exemple, on à fabriqué une mousse de silice comme suit :
On a dispersé dans l'eau de la silice précipitée commercialisée par la société Rhodia sous la référence Tixosil T365 (de diamètre médian D50 de l'ordre de 3.5 microns et de surface spécifique de l'ordre de 130 $m^2$/g), puis on a ajouté à cette dispersion un tensioactif anionique ammonium polyacrylate commercialisé par la société Zschimmer and Schwartz sous la référence Schaümungsmittel W53FL, des agents rétenteurs d'eau (dans le présent exemple : gélatine et glycérine, la glycérine jouant également le rôle de plastifiant) et un liant minéral (ici du silicate de sodium) avant d'agiter mécaniquement à l'aide d'un mélangeur de sorte que le volume de la mousse humide ainsi obtenue soit égal à environ 3 fois le volume initial de la dispersion non moussée.

La composition du mélange était la suivante (exprimée en pourcentages pondéraux) : eau : 73,4%; silice précipitée : 18,2%; silicate de sodium 2.7%; gélatine : 3,2% glycérine 0,5% et agent tensioactif : 1,9%.

La mousse humide de silice a ensuite été coulée dans un moule en téflon et placée à l'étuve à une température inférieure à 25°C et à 80% d'humidité relative pendant 3 jours. Une fois séchée, la mousse ou pâte, ayant subi une perte de masse d'environ 80 %, a durci, se présentant sous la forme d'un solide. Le monolithe a ensuite été placé dans une enceinte fermée contenant de l'hexaméthyldisilazane (HMDS) en tant qu'agent hydrophobe (ce composé étant commercialisé sous la référence 52619 de la marque Fluka par la société Sigma - Aldrich) pendant 4 heures à 80°C.

Le produit obtenu, présentant les deux gammes de porosités selon l'invention (en particulier des macropores de diamètres compris entre 10 $\mu$m et 3 mm, et des pores submicroniques de diamètres supérieurs à 4 nm et inférieurs à 300 nm) et renfermant plus de 65% d'air en volume a ensuite été caractérisé selon les méthodes mentionnées plus avant dans le texte, les valeurs obtenues étant les suivantes :

- Masse volumique : 200 kg/m$^3$;
- Volume poreux des macropores de diamètres compris entre 10 microns et 3 mm: au moins 3.3 cm$^3$/g;
- Volume poreux des pores submicroniques de diamètres compris entre 4 nm et 300 nm : 1.25 cm$^3$/g;
- Conductivité thermique : 36 mW/m.K.

La précision des mesures était estimée à 5%.
Les valeurs indiquées montrent que le matériau inorganique isolant thermique obtenu présentait une faible masse volumique en même temps qu'une porosité importante avec deux types de porosités, dont des pores présentant un diamètre compris entre 4 nm et 300 nm, et présentait des performances thermiques avantageuses.

Exemple 2:

On a pré-dispersé dans l'eau de la silice précipitée (celle commercialisée par la société Rhodia sous la référence Tixosil T365 comme dans l'exemple 1), à 25% en poids dans l'eau, par sonication (utilisation d'une sonde ou d'un bain à ultrasons). Le pH a été ajusté à 8.5 par ajout de soude, puis de l'eau a été ajoutée pour d'atteindre une concentration finale en silice de 22% et la dispersion a de nouveau été homogénéisée par sonication.

De l'éther de cellulose (commercialisé sous la référence Methocel 311 par la société Dow Chemical Company), pouvant réduire les fissurations de la mousse de silice au séchage, a ensuite été ajouté à la concentration finale de 0.25 %. La dispersion a de nouveau été homogénéisée par sonication durant quelques minutes, le mélange obtenu étant homogène.

Le tensioactif zwitterionique CAPB (commercialisé par la société Goldschmidt) a ensuite été ajouté à une concentration de 0,3 mg par m$^2$ de surface spécifique de silice, soit 0.045 g par gramme de silice. Le mélange devenu plus visqueux a de nouveau été homogénéisé aux ultrasons, puis le moussage de la dispersion de silice a été réalisé à l'aide d'un robot mixeur rotatif de marque Elekom EK719.

La mousse humide a ensuite été répartie dans des coupelles d'évaporation en Téflon, puis séchée en enceinte climatique à 35°C et 80% d'humidité relative. Les mousses de silice ont ensuite été hydrophobées par réaction avec l'hexaméthyldisilazane (HMDS) en phase vapeur (l'échantillon étant placé dans une enceinte fermée contenant le HMDS liquide, celui-ci s'évaporant et venant s'adsorber à la surface du matériau) dans des réacteurs en Teflon pendant 4 heures à 80°C. Une fois le traitement terminé, les réacteurs ont été refroidis à température ambiante avant ouverture, les échantillons de mousse solide obtenus ont ensuite été usinés de façon notamment à ce que leurs faces soient planes et parallèles, les échantillons étant en outre stabilisés en atmosphère ambiante pendant un week-end.

Le produit selon l'invention obtenu, présentant les deux gammes de porosités selon l'invention (en particulier des macropores de diamètres compris entre 10 $\mu$m et 3 mm, et des pores submicroniques de diamètres supérieurs à 4 nm et inférieurs à 300 nm) et renfermant plus de 65% d'air en volume, a ensuite été caractérisé, avant et après hydrophobation, selon les méthodes mentionnées plus avant dans le texte, les valeurs obtenues étant les suivantes :

- Masse volumique : 130 kg/m$^3$;
- surface spécifique : 150 m$^2$/g;
- Volume poreux des macropores de diamètres compris entre 10 microns et 3 mm : au moins 6 cm$^3$/g;
- Volume poreux des pores submicroniques de diamètres compris entre 4 nm et 300 nm : 1.3 cm$^3$/g;
- Conductivité thermique avant hydrophobation: 35 mW/m.K;
- Conductivité thermique après hydrophobation : 29 mW/m.K.

On observe que le matériau obtenu à l'aide du procédé préféré selon l'invention, recourant en particulier à l'utilisation de cocamidopropyl comme tensioactif, présente une conductivité thermique encore améliorée par rapport au matériau obtenu à l'aide du procédé général recourant notamment à un tensioactif anionique tel que le stéarate d'ammonium. En outre, l'hydrophobation diminue encore la conductivité thermique de la mousse.

On a en outre comparé la stabilité de la mousse de silice obtenue avec le tensioactif CAPB avec celle d'autres mousses de silice obtenues avec d'autres tensioactifs (ainsi que leur capacité à produire une mousse de silice).

Pour cela, chaque suspension a été préparée en dispersant la silice précipitée (commercialisée sous la référence Tixosil T365 par la société Rhodia) dans de l'eau distillée. Le pH a été ajusté à 8.5 à l'aide d'une solution de soude (2M), puis la suspension a été agitée dans un bain à ultrasons pendant 5 heures. Le tensioactif a ensuite été ajouté à la suspension, la concentration de silice dans la suspension étant de 15.9% en poids et la concentration de tensioactif de 0.5%.

5.5 g de suspension ont ensuite été placés dans un récipient cylindrique en verre de 30 ml et le volume Vs de la suspension a été mesuré. Puis la suspension a été agitée à l'aide d'un mixeur rotatif pendant une minute. Le volume Vm de la mousse formée a été mesuré (Vm=Vs si aucune mousse n'est formée), la fraction volumique d'air initialement incorporée dans la mousse étant définie comme le ratio F0=(Vm-Vs)/Vm, cette fraction volumique permettant de juger de la moussabilité (aptitude à mousser) de la suspension. Le récipient a ensuite été laissé une heure à température et pression ambiante, puis le volume de la mousse a de nouveau été mesuré et la fraction volumique d'air encore présent (F1) a été évaluée, la précision estimée sur les mesures de F0 et F1 étant de 5%.

Avec le tensioactif Zwitterionique CAPB du présent exemple, les valeurs de FO et F1 obtenues ont été chacune de 60%.

Avec un tensioactif cationique tel que le cethyl trimethyl ammonium chlodide (CTAC) commercialisé par la Société Sigma, il n'a pas été possible d'obtenir une mousse de silice (FO=F1=0%), de même qu'avec un tensioactif Zwitterionique de type cocoamidopropyl hydroxysultaine (CHS) (autre qu'une bétaine) commercialisé par la Société Rhodia.

Avec un tensioactif anionique tel que le sodium lauryl ether sulfate (SLES) commercialisé par la Société Stepan, une mousse de silice a été facilement obtenue (F0 = 60%), cependant elle n'a pas pu être conservée suffisamment dans le temps (F1 = 0%).

L'utilisation du tensioactif CAPB est donc particulièrement avantageuse par rapport à d'autres tensioactifs en permettant notamment l'obtention d'une mousse suffisamment stable dans le temps pour permettre son séchage et sa solidification.

Exemple comparatif

Dans cet exemple, on a mesuré les caractéristiques d'une mousse de verre commercialisée sous la référence FoamGlas S3 par la société Foamglas building. Cette mousse est purement minérale et présente des masses volumiques de même ordre que celles des produits selon l'invention. Cependant, à la différence des produits selon l'invention, elle ne présente qu'une seule gamme de porosité (macropores de diamètres supérieurs à 10 $\mu$m). Les valeurs obtenues étaient les suivantes :

- Masse volumique : 130 kg/m$^3$;
- Volume poreux des macropores de diamètres supérieurs à 10 microns : 7.2 cm$^3$/g;
- Conductivité thermique : 45 mW/m.K.

La précision des mesures était estimée à 5%.

On a observé qu'à masse volumique équivalente, les propriétés d'isolation thermique du produit selon l'invention sont bien meilleures que celles d'une mousse 'monoporeuse' telle que dans le présent exemple (voir en comparaison de l'exemple 2 selon l'invention).

Les produits selon l'invention sont particulièrement appropriés pour l'isolation thermique haute performance en particulier dans le domaine de la construction pour isoler les parois (extérieures ou intérieures) de bâtiments. Les produits selon l'invention ont également des propriétés ou peuvent être utilisés avec avantages dans l'isolation acoustique, et les applications d'allègement de matériaux.

## Revendications

1. Matériau isolant thermique, en particulier sous forme d'une mousse solide, formé à partir de particules de silice, autres que des aérogels, de porosité submicronique, ce matériau intégrant deux gammes de porosités différentes, dont une première gamme constituée de macropores de diamètres compris entre 10 microns et 3 mm, et une seconde gamme constituée de pores submicroniques de diamètres supérieurs à 4 nm et inférieurs à 300 nm, le volume poreux desdits pores submicroniques étant d'au moins 1 cm$^3$/g, et la masse volumique dudit matériau isolant étant inférieure à 300 kg/m$^3$.

2. Matériau isolant thermique selon la revendication 1, **caractérisé en ce qu'**il est majoritairement inorganique.

3. Matériau isolant thermique selon l'une des revendications 1 ou 2, **caractérisé en ce qu'**il est obtenu à partir du mélange d'au moins les éléments suivants : de l'eau ou une mousse aqueuse, des particules de silice de porosité submicronique, généralement incorporées à la mousse ou à l'eau sous forme d'une dispersion/suspension, lesdites particules présentant une surface spécifique S supérieure à 5 m$^2$/g, en particulier supérieure à 50 m$^2$/g, et le cas échéant un liant organique et/ou un liant minéral, et/ou un tensioactif et/ou un agent porogène et/ou des renforts.

4. Matériau isolant thermique selon l'une des revendications 1 à 3, **caractérisé en ce que** les particules de silice sont à base de silice amorphe, telle que la silice précipitée, la silice pyrogénée, la fumée de silice ou un gel de silice.

5. Matériau isolant thermique selon l'une des revendications 1 à 4, **caractérisé en ce que** le volume poreux pour les pores submicroniques varie de 1 à 3 cm$^3$/g, et le volume poreux pour les macropores est supérieur à 1 cm$^3$/g, de préférence supérieur à 3 cm$^3$/g, et en particulier varie de 5 à 15 cm$^3$/g.

6. Matériau isolant thermique selon l'une des revendications 1 à 5, **caractérisé en ce qu'**il a une conductivité thermique inférieure à 40 mW/m.K, en particulier inférieure à 35 mW/m.K, et de préférence inférieure à 30 mW/m.K, voire inférieure à 25 mW/m.K.

7. Utilisation du matériau selon l'une des revendications 1 à 6 pour l'isolation thermique de bâtiments.

8. Procédé de fabrication du matériau isolant thermique selon l'une des revendications 1 à 6, comprenant les étapes suivantes :

   - au moins une étape de préparation d'un mélange de particules de silice de surface spécifique S supérieure à 5 m$^2$/g, en particulier supérieure à 50 m$^2$/g, et possédant un volume poreux d'au moins 1 cm$^3$/g, dans la gamme de porosité comprise entre 4 nm et 300 nm ;
   - au moins une étape de réalisation d'une mousse incluant lesdites particules;
   - au moins une étape de mise en forme, notamment par moulage ou coulage ou projection de cette mousse ;
   - au moins une étape de séchage au moins partiel de la mousse ou du matériau ainsi obtenu.

9. Procédé selon la revendication 8, **caractérisé en ce que** l'on ajoute dans le mélange de particules ou dans la mousse au moins un additif tel qu'un agent porogène, un tensioactif, un liant organique ou inorganique, un agent rhéologique, un agent de surface et/ou des renforts.

10. Procédé de fabrication d'un matériau isolant thermique selon l'une des revendications 8 ou 9, comprenant les étapes suivantes :

    - au moins une étape de préparation d'un mélange, généralement aqueux, de particules de silice de surface spécifique S supérieure à 5

m$^2$/g, en particulier supérieure à 50 m$^2$/g, et possédant un volume poreux d'au moins 1 cm$^3$/g, dans la gamme de porosité comprise entre 4 nm et 300 nm,
    - au moins une étape de réalisation d'une mousse à partir dudit mélange de particules en incorporant au moins un zwittérion choisi parmi les bétaïnes, en particulier les bétaïnes d'ammonium, et de façon particulièrement préférée, le cocamidopropyl bétaïne,
    - au moins une étape de mise en forme, notamment par moulage ou coulage ou projection de cette mousse ,
    - au moins une étape de séchage au moins partiel de la mousse ou du matériau ainsi obtenu,
    - le cas échéant au moins une étape d'hydrophobation.

**Patentansprüche**

1. Wärmedämmstoff, insbesondere in Form eines festen Schaums, der aus anderen Siliciumdioxidpartikeln als Aerogelen gebildet ist, mit einer Porosität im Submikrometerbereich, wobei dieses Material zwei verschiedene Porositätsbereiche beinhaltet, von denen ein erster Bereich aus Makroporen mit Durchmessern zwischen 10 Mikrometern und 3 mm besteht und ein zweiter Bereich aus Submikrometerporen mit Durchmessern von mehr als 4 nm und weniger als 300 nm besteht, wobei das Porenvolumen der Submikrometerporen mindestens 1 cm$^3$/g und die Dichte des Dämmstoffs weniger als 300 kg/m$^3$ beträgt.

2. Wärmedämmstoff nach Anspruch 1, **dadurch gekennzeichnet, dass** er mehrheitlich anorganisch ist.

3. Wärmedämmstoff nach einem der Ansprüche 1 oder 2, **dadurch gekennzeichnet, dass** er aus dem Gemisch mindestens der folgenden Elemente erhalten ist: Wasser oder einem wässrigen Schaum, Siliciumdioxidpartikel mit einer Porosität im Submikrometerbereich, die im Allgemeinen in Form einer Dispersion/Suspension in den Schaum oder in das Wasser eingearbeitet sind, wobei die Partikel eine spezifische Oberfläche S von mehr als 5 m$^2$/g aufweisen, insbesondere von mehr als 50 m$^2$/g, und gegebenenfalls einem organischen Bindemittel und/oder einem mineralischen Bindemittel und/oder einem Tensid und/oder einem Porenbildner und/oder Verstärkungen.

4. Wärmedämmstoff nach einem der Ansprüche 1 bis 3, **dadurch gekennzeichnet, dass** die Siliciumdioxidpartikel auf amorphem Siliciumdioxid wie ausgefälltem Siliciumdioxid, pyrogenem Siliciumdioxid, Silicastaub oder einem Silicagel basieren.

**5.** Wärmedämmstoff nach einem der Ansprüche 1 bis 4, **dadurch gekennzeichnet, dass** das Porenvolumen bei den Submikrometerporen von 1 bis 3 cm³/g schwankt und das Porenvolumen bei den Makroporen größer als 1 cm³/g, bevorzugt größer als 3 cm³/g ist und insbesondere von 5 bis 15 cm³/g schwankt.

**6.** Wärmedämmstoff nach einem der Ansprüche 1 bis 5, **dadurch gekennzeichnet, dass** er eine Wärmeleitfähigkeit von weniger als 40 mW/m K, insbesondere weniger als 35 mW/m K und bevorzugt weniger als 30 mW/m K, sogar weniger als 25 mW/m K aufweist.

**7.** Verwendung des Materials nach einem der Ansprüche 1 bis 6 zur Wärmedämmung von Gebäuden.

**8.** Verfahren zur Herstellung des Wärmedämmstoffs nach einem der Ansprüche 1 bis 6, umfassend die folgenden Schritte:

- mindestens einen Schritt des Vorbereitens eines Gemischs aus Siliciumdioxidpartikeln mit einer spezifischen Oberfläche S von mehr als 5 m²/g, insbesondere vonmehr als 50 m²/g, und mit einem Porenvolumen von mindestens 1 cm³/g im Porositätsbereich zwischen 4 nm und 300 nm;
- mindestens einen Schritt des Herstellens eines Schaums, der diese Partikel enthält;
- mindestens einen Schritt des Formgebens, insbesondere durch Formen oder Gießen oder Sprühen dieses Schaums;
- mindestens einen Schritt des zumindest partiellen Trocknens des Schaums oder des so erhaltenen Materials.

**9.** Verfahren nach Anspruch 8, **dadurch gekennzeichnet, dass** dem Partikelgemisch oder dem Schaum mindestens ein Additiv wie ein Porenbildner, ein Tensid, ein organisches oder anorganisches Bindemittel, ein Fließmittel, eine oberflächenaktive Substanz und/oder Verstärkungen zuzugeben werden.

**10.** Verfahren zur Herstellung des Wärmedämmstoffs nach einem der Ansprüche 8 oder 9, umfassend die folgenden Schritte:

- mindestens einen Schritt des Vorbereitens eines allgemein wässrigen Gemisches aus Siliciumdioxidpartikeln mit einer spezifischen Oberfläche S von mehr als 5 m²/g, insbesondere von mehr als 50 m²/g, und mit einem Porenvolumen von mindestens 1 cm³/g im Porositätsbereich zwischen 4 nm und 300 nm,

- mindestens einen Schritt des Herstellens eines Schaums aus dem Partikelgemisch durch Einarbeiten mindestens eines Zwitterions, ausgewählt aus den Betainen, insbesondere den Ammoniumbetainen und besonders bevorzugt dem Cocamidopropylbetain,
- mindestens einen Schritt des Formgebens, insbesondere durch Formen oder Gießen oder Sprühen dieses Schaums,
- mindestens einen Schritt des zumindest partiellen Trocknens des Schaums oder des so erhaltenen Materials,
- gegebenenfalls mindestens einen Schritt des Hydrophobierens.

**Claims**

**1.** A heat-insulating material, in particular in the form of a solid foam, formed from silica particles, other than aerogel particles, with a submicron porosity, this material incorporating two different ranges of porosities, including a first range consisting of macropores with diameters of between 10 microns and 3 mm, and a second range consisting of submicron pores with diameters greater than 4 nm and less than 300 nm, the pore volume of said submicron pores being at least 1 cm³/g and the mass per unit volume of said insulating material being less than 300 kg/m³.

**2.** The heat-insulating material as claimed in claim 1, **characterized in that** it is predominantly inorganic.

**3.** The heat-insulating material as claimed in either of claims 1 and 2, **characterized in that** it is obtained from the mixture of at least the following elements: water or an aqueous foam, silica particles of submicron porosity, generally incorporated into the foam or the water in the form of a dispersion/suspension, said particles having a specific surface area S of greater than 5 m²/g, in particular greater than 50 m²/g, and, where appropriate, an organic binder and/or a mineral binder, and/or a surfactant and/or a pore-forming agent and/or reinforcements.

**4.** The heat-insulating material as claimed in one of claims 1 to 3, **characterized in that** silica particles are based on an amorphous silica, such as precipitated silica, pyrogened silica, fumed silica or a silica gel.

**5.** The heat-insulating material as claimed in one of claims 1 to 4, **characterized in that** the pore volume for the submicron pores ranges from 1 to 3 cm³/g, and the pore volume for the macropores is greater than 1 cm³/g, preferably greater than 3 cm³/g, and in particular ranges from 5 to 15 cm³/g.

6. The heat-insulating material as claimed in one of claims 1 to 5, **characterized in that** it has a heat conductivity of less than 40 mW/m.K, in particular less than 35 mW/m.K and preferably less than 30 mW/m.K, or even less than 25 mW/m.K.

7. The use of the material as claimed in one of claims 1 to 6 for the heat insulation of buildings.

8. A process for manufacturing the heat-insulating material as claimed in one of claims 1 to 6, comprising the following steps:

   - at least one step of preparing a mixture of silica particles with a specific surface area S of greater than 5 $m^2/g$, in particular greater than 50 $m^2/g$, and having a pore volume of at least 1 $cm^3/g$ in the porosity range between 4 nm and 300 nm;
   - at least one step of preparing a foam including said particles;
   - at least one step of putting in form, especially by moulding, casting or spraying this foam;
   - at least one step of at least partial drying of the foam or of the material thus obtained.

9. The process as claimed in claim 8, **characterized in that** at least one additive such as a pore-forming agent, a surfactant, an organic or inorganic binder, a rheological agent, a surface agent and/or reinforcements is added to the mixture of particles or to the foam.

10. A process for manufacturing a heat-insulating material as claimed in either of claims 8 or 9, comprising the following steps:

    - at least one step of preparing a mixture, generally an aqueous mixture, of silica particles with a specific surface area S of greater than 5 $m^2/g$, in particular greater than 50 $m^2/g$, and having a pore volume of at least 1 $cm^3/g$ in the porosity range between 4 nm and 300 nm,
    - at least one step of preparing a foam from said mixture of particles by incorporating at least one zwitterion chosen from betaines, in particular ammonium betaines, and particularly preferably cocamidopropylbetaine,
    - at least one step of putting in form, especially by moulding, casting or spraying this foam,
    - at least one step of at least partial drying of the foam or of the material thus obtained,
    - where appropriate, at least one hydrophobation step.

**EP 2 731 986 B1**

## RÉFÉRENCES CITÉES DANS LA DESCRIPTION

**Documents brevets cités dans la description**

- WO 2010126792 A